# EUROPEAN PATENT SPECIFICATION

(11) **EP 4 361 007 B1**
(45) Date of publication and mention of the grant of the patent: **18.06.2025**
(21) Application number: 23160713.6
(22) Date of filing: 08.03.2023
(51) Int. Cl.: B62J 17/00, B62J 25/04

(54) **STRADDLED VEHICLE**
GRÄTSCHSITZFAHRZEUG
VÉHICULE À SELLE

(30) Priority: 27.10.2022 JP 2022172145
(43) Date of publication of application: 01.05.2024
(73) Proprietor: Yamaha Hatsudoki Kabushiki Kaisha, Iwata-shi, Shizuoka 438-8501 (JP)
(72) Inventor: Akaradechakul, Nuttaporn, Samutprakarn (TH); Kongnakorn, Unnop, Samutprakarn (TH); Fujisaka, Masahiko, Samutprakarn (TH)
(74) Representative: Grünecker Patent- und Rechtsanwälte PartG mbB

(56) References cited:
- EP-A1- 2 610 149
- EP-A1- 2 669 166
- EP-A1- 2 974 950
- EP-A2- 2 610 152
- JP-B2- 3 263 995

## Description

The present invention relates to a straddled vehicle according to the preamble of independent claim 1. Such a straddled vehicle can be taken from the prior art document prior art document EP 2 610 152 A2.

Some straddled vehicles are provided with a footboard on which the rider's foot is placed. For example, the motorcycle disclosed in JP 2019-162936 A includes a footboard extending in the vehicle width direction. The footboard is positioned adjacent to the cover under the seat. The engine is disposed in the cover under the seat.

In order to improve rider comfort, it is desirable that the footboard have a large footrest space. However, if the footboard is enlarged in order to provide a large footrest space on the footboard, the size of the vehicle will increase. For example, if the entire footboard is enlarged in the vehicle width direction in order to increase the footrest space in the vehicle width direction, the rider's foot grounding performance is reduced when the foot touches the ground.

On the other hand, by reducing the width of the cover under the seat, a large footrest space can be provided in the vehicle width direction on the footboard. However, when the engine is disposed inside the cover, it is necessary to provide a space for arranging the engine inside the cover, so it is not easy to reduce the width of the cover. An object of the present invention is to provide straddled vehicle having a large footrest space on a footboard while suppressing deterioration of foot grounding in a straddled vehicle in which an engine is disposed in a cover under a seat. According to the present invention said object is solved by straddled vehicle having the features of independent claim 1. Preferred embodiments are laid down in the dependent claims.

A straddled vehicle according to an aspect of the embodiment includes a seat, a cover, an engine, and a footboard. The cover is disposed below the seat. The engine is disposed in the cover. The footboard is disposed in front of the cover. The cover includes a first side surface extending upwardly from the footboard. The first side surface includes a first recess. The first recess is disposed adjacent to the footboard. The first recess is recessed laterally inward of the cover. The first recess overlaps the engine as seen in a vehicle side view.

In the straddled vehicle according to the present aspect, the cover under the seat is provided with the first recess. The first recess is disposed adjacent to the footboard on the first side surface of the cover and has a shape recessed laterally inward of the cover. Therefore, the footrest space on the footboard is expanded while suppressing the deterioration of the foot grounding ability. Further, the width of the cover is partially narrowed by the first recess, instead of narrowing the width of the entire cover. Therefore, a space for arranging the engine is provided in the cover.

The first side surface includes a first lower edge. The first lower edge is inclined forward and laterally inward. The footboard includes a first flat surface. The first flat surface extends forward from the laterally outside of the first lower edge. The first recess is disposed adjacent to the first flat surface. Accordingly, the area of the first flat surface for placing the rider's foot is enlarged by the first recess.

The first recess is provided to fit a heel of a rider's shoe resting on the first flat surface. In this case, by making the first recess as small as possible, a large space inside the cover is provided.

The first side surface may include a first side panel and a second side panel. The second side panel may be provided separately from the first side panel. The second side panel may be attached to the first side panel. In this case, since the first side surface is formed of a plurality of panels, the degree of freedom in designing the cover is improved. On the other hand, when the first side surface is formed of a plurality of panels, the width of the first side surface becomes large, but the first recess provides a footrest space.

The first side surface may include a bulging portion. The bulging portion may be disposed above the first recess. The bulging portion may have a shape that bulges laterally outward. In this case, when the foot is placed on the first recess, the foot of the rider is stably supported by bringing the foot into contact with the bulging portion.

The cover includes a second side surface. The second side surface is located opposite to the first side surface. The second side surface extends upward from the footboard. The second side surface includes a second recess. The second recess is disposed adjacent to the footboard. The second recess is recessed laterally inward of the cover. The second recess overlaps the engine as seen in the vehicle side view. Accordingly, the footrest space on the footboard is enlarged by the second recess while suppressing deterioration of the foot grounding ability. Also, a space for arranging the engine is provided in the cover.

The second side surface includes a second lower edge. The second lower edge is inclined forward and laterally inward. The footboard includes a second flat surface. The second flat surface extends forward from the laterally outside of the second lower edge. The second recess is disposed adjacent to the second flat surface. Accordingly, the area of the second flat surface for placing the rider's foot is enlarged by the second recess.

The footboard may have a flat shape across the vehicle width direction. In this case, the footrest space on the footboard is enlarged.

The maximum width of the footboard may be 435 mm or more and 531 mm or less. The maximum width of the footboard may be 386 mm or more and 580 mm or less. The straddled vehicle may have a wheelbase of 1143 mm or more and 1452 mm or less. The straddled vehicle may have a wheelbase of 1270 mm or more and 1320 mm or less. In this case, the footrest space on the footboard is increased in a small straddled vehicle.

The height of the first recess may be 40 mm or more and 48 mm or less. The height of the first recess may be 36 mm or more and 52 mm or less. In this case, the first recess is provided to fit the heel of the rider's shoe. Accordingly, by making the first recess as small as possible, a large space inside the cover can be provided.

The depth of the first recess may be 5.4 mm or more and 6.6 mm or less. The depth of the first recess may be 4.8 mm or more and 7.2 mm or less. In this case, the space for placing the foot on the footboard is increased, and interference with the engine inside the cover is suppressed.

### BRIEF DESCRIPTION OF THE DRAWINGS

FIG. 1 is a side view of a straddled vehicle according to an embodiment.
FIG. 2 is a top view of the straddled vehicle.
FIG. 3 is an enlarged side view of the straddled vehicle.
FIG. 4 is a perspective view of a rear portion of the straddled vehicle.
FIG. 5 is a top view showing a vicinity of a footboard and a rear cover.
FIG. 6 is an exploded perspective view of the rear cover.
FIG. 7 is an enlarged side view of a first recess.
FIG. 8 is an enlarged top view of the first recess.
FIG. 9 is a top view showing an example of a position of a rider's shoe and the first recess.

### DETAILED DESCRIPTION

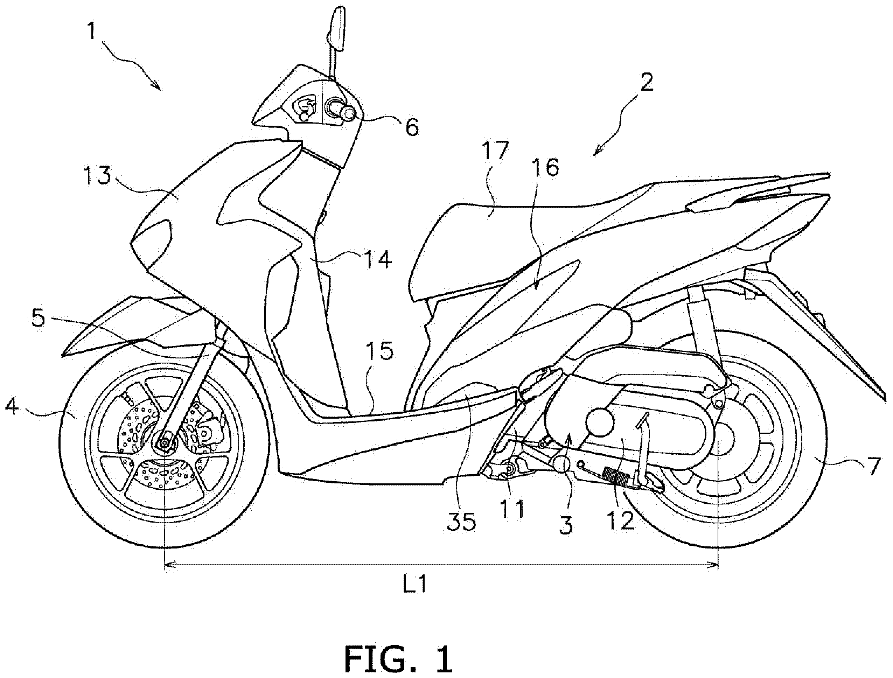

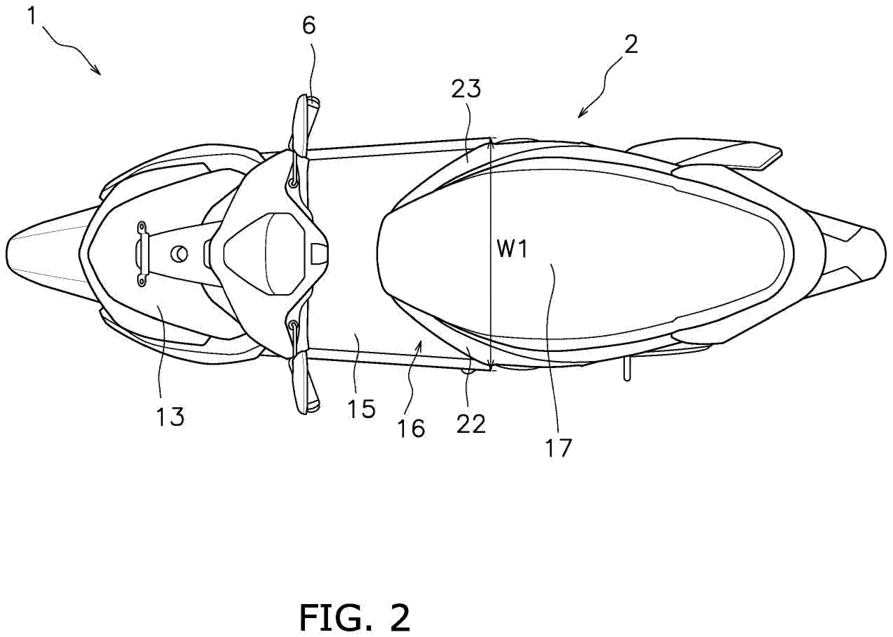

A straddled vehicle according to an embodiment will be described below with reference to the drawings. FIG. 1 is a side view of a straddled vehicle 1 according to an embodiment. FIG. 2 is a top view of the straddled vehicle 1. The straddled vehicle 1 according to the present embodiment is a scooter. As shown in FIGS. 1 and 2, the straddled vehicle 1 includes a vehicle body 2, a power unit 3, a front wheel 4, a front fork 5, a handle 6, and a rear wheel 7.

The power unit 3 is supported by the vehicle body 2. The power unit 3 includes an engine 11 and a transmission 12. The rear wheel 7 is rotatably supported by the power unit 3. The front wheel 4 is rotatably supported by the front fork 5. The handle 6 is connected to the front fork 5. As shown in FIG. 1, the wheelbase L1 of the straddled vehicle 1 may be 1143 mm or more and 1452 mm or less. The wheelbase L1 of the straddled vehicle 1 may be 1270 mm or more and 1320 mm or less. The wheelbase L1 extends in the vehicle front-rear direction of the straddled vehicle 1 according to a rider sitting on the seat 17 with view in forward direction. A vertical direction of the straddled vehicle perpendicular to the vehicle front-rear direction and the width direction of the straddled vehicle 1 referrers to the vehicle up-down direction. The width direction coincides with the vehicle left-right direction.

The vehicle body 2 includes a front cover 13, a leg shield 14, a footboard 15, a rear cover 16, and a seat 17. The front cover 13 is disposed above the front wheel 4. The leg shield 14 is disposed behind the front cover 13. The seat 17 is disposed behind the leg shield 14. The rear cover 16 is disposed below the seat 17.

The footboard 15 is disposed in front of the rear cover 16. The footboard 15 is disposed between the leg shield 14 and the rear cover 16. The footboard 15 has a flat shape extending in the vehicle width direction. As shown in FIG. 2, the width of the footboard 15 is greatest at the rear of the footboard 15. The maximum width W1 of the footboard 15 may be 435 mm or more and 531 mm or less. The maximum width W1 of the footboard 15 may be 386 mm or more and 580 mm or less.

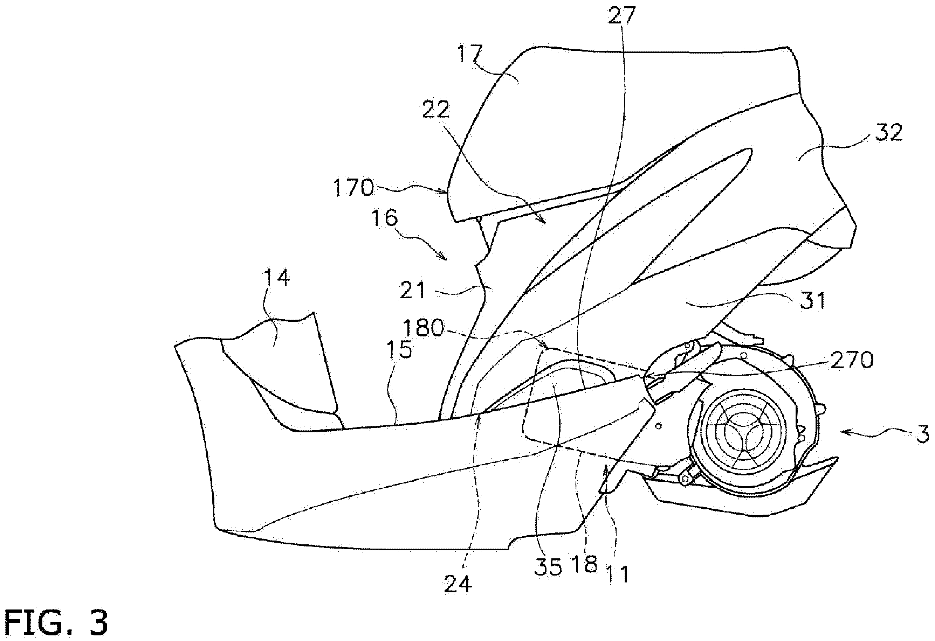

FIG. 3 is an enlarged side view of the straddled vehicle 1. As shown in FIG. 3, a part of the engine 11 is disposed inside the rear cover 16. Specifically, the engine 11 includes a cylinder head 18. The cylinder head 18 is disposed in the rear cover 16.

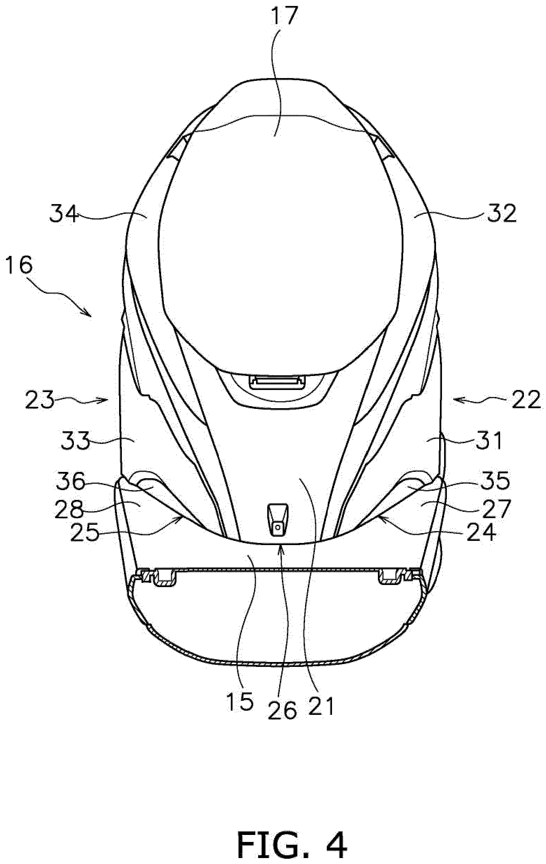

FIG. 4 is a perspective view of the rear portion of the straddled vehicle 1. As shown in FIG. 4, the rear cover 16 includes a center surface 21, a first side surface 22, and a second side surface 23. The center surface 21, the first side surface 22, and the second side surface 23 extend upward from the footboard 15. The center surface 21 is disposed in the center of the vehicle body 2 in the left-right direction. The center surface 21 is disposed between the first side surface 22 and the second side surface 23.

The first side surface 22 is disposed on one side of the center surface 21 in the left-right direction. The second side surface 23 is disposed on the other side of the center surface 21 in the left-right direction. The second side surface 23 is located opposite the first side surface 22. The first side surface 22 extends laterally outward and rearward from the center surface 21. The second side surface 23 extends laterally outward and rearward from the center surface 21. In the present embodiment, the first side surface 22 is disposed to the left of the center surface 21 and the second side surface 23 is disposed to the right of the center surface 21. However, the first side surface 22 and the second side surface 23 may be disposed opposite to the above.

As shown in FIG. 3, the first side surface 22 overlaps a portion of the engine 11 as seen in the vehicle side view. Specifically, the first side surface 22 overlaps the cylinder head 18 as seen in the vehicle side view. The second side surface 23 is disposed symmetrically with the first side surface 22. As with the first side surface 22, the second side surface 23 overlaps the cylinder head 18 as seen in the vehicle side view.

As shown in FIG. 4, the first side surface 22 includes a first lower edge 24. The first lower edge 24 is inclined forward and laterally inward. The second side surface 23 includes a second lower edge 25. The second lower edge 25 is inclined forward and laterally inward. The first side surface 22 and the second side surface 23 are tapered forward. The center surface 21 includes a central lower edge 26. The central lower edge 26 is disposed between the first lower edge 24 and the second lower edge 25.

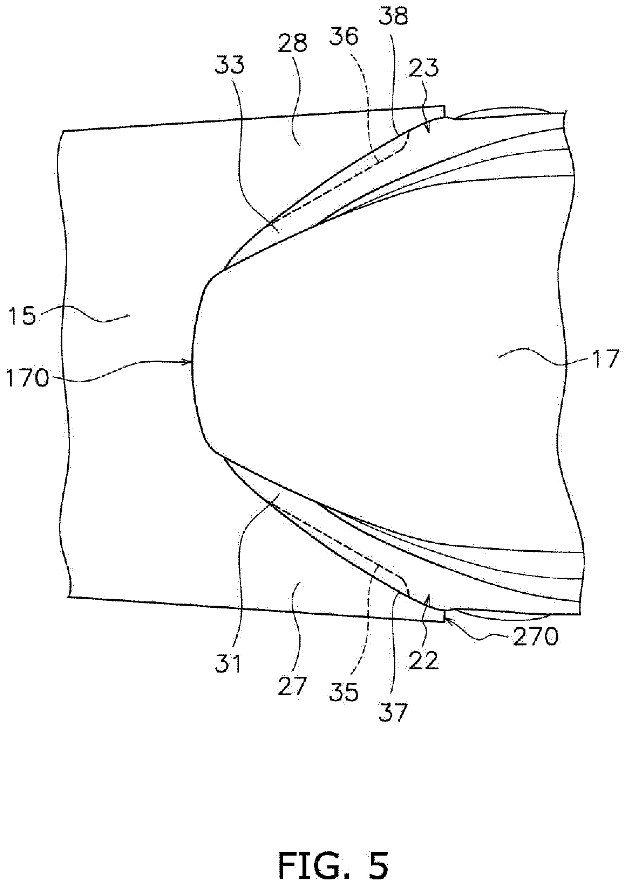

FIG. 5 is a top view showing the vicinity of the footboard 15 and the rear cover 16. As shown in FIG. 5, the footboard 15 includes a first flat surface 27 and a second flat surface 28. The first flat surface 27 extends forward from the laterally outside of the first lower edge 24. The first flat surface 27 is a portion of the footboard 15 located to the leftward of the first lower edge 24 and rearward of the front end of the central lower edge 26. The first flat surface 27 has a shape that tapers rearward. The second flat surface 28 extends forward from the laterally outside of the second lower edge 25. The second flat surface 28 is a portion of the footboard 15 located rightward of the second lower edge 25 and rearward of the front end of the central lower edge 26. The second flat surface 28 has a shape that tapers rearward.

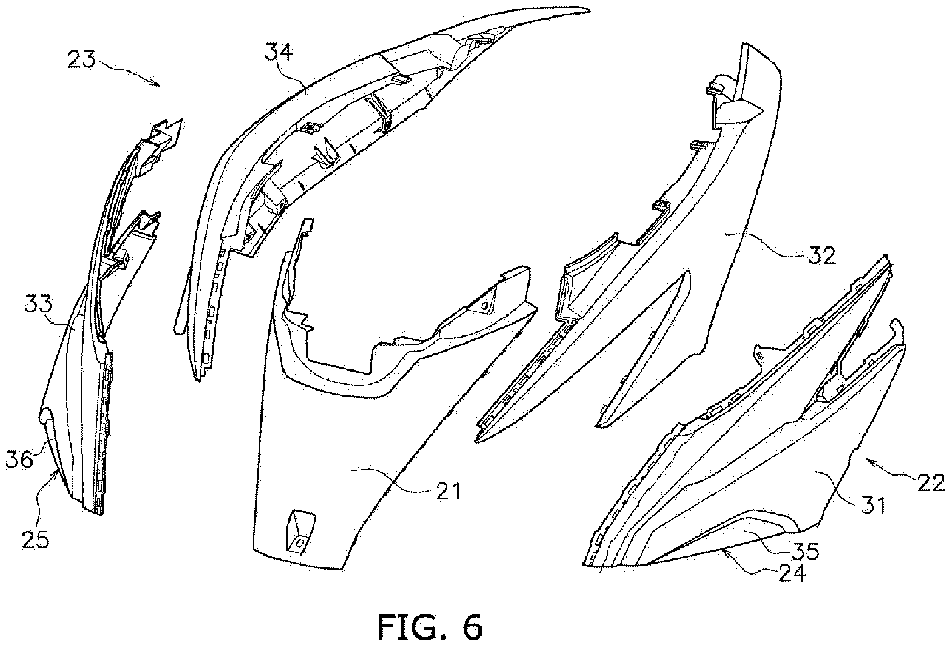

FIG. 6 is an exploded perspective view of the rear cover 16. As shown in FIG. 6, the first side surface 22 includes a first side panel 31 and a second side panel 32. The first side panel 31 is disposed below the second side panel 32. The first side panel 31 is disposed adjacent to the footboard 15.

The second side panel 32 is provided separately from the first side panel 31. The second side panel 32 is attached to the first side panel 31. The first side panel 31 and the second side panel 32 each include, for example, a hole and a protrusion that engages with the hole, and are connected to each other by engaging with each other.

The second side surface 23 includes a third side panel 33 and a fourth side panel 34. The third side panel 33 is disposed below the fourth side panel 34. The third side panel 33 is disposed adjacent to the footboard 15. The fourth side panel 34 is provided separately from the third side panel 33. The fourth side panel 34 is attached to the third side panel 33.

The third side panel 33 and the fourth side panel 34 each include, for example, a hole and a protrusion that engages with the hole, and are connected to each other by engaging with each other. The first to fourth side panels 31-34 are each provided separately from the center surface 21. The first to fourth side panels 31-34 and the center surface 21, for example, each include a hole and a projection that engages the hole, which engage with each other to allow the first to fourth side panels 31-34 is connected to the center surface 21.

The first side surface 22 includes a first recess 35. The first recess 35 has a shape recessed laterally inward of the rear cover 16. As shown in FIG. 3, the first recess 35 overlaps the engine 11 as seen in the vehicle side view. Specifically, the first recess 35 overlaps the cylinder head 18 as seen in the vehicle side view. The first recess 35 is provided in the first side panel 31. The first recess 35 is disposed adjacent to the first flat surface 27. The first recess 35 extends upward from the first flat surface 27.

As shown in FIG. 3, the first recess 35 is disposed behind the front end 170 of the seat 17 as seen in the vehicle side view. As seen in the vehicle side view, the first recess 35 is disposed forward of the rear end 270 of the first flat surface 27. The first recess 35 has an upwardly curved shape. The first recess 35 has a shape whose height increases toward the rear. The first recess 35 is disposed below the upper end 180 of the cylinder head 18. As shown in FIG. 5, the first recess 35 extends forward and laterally inward along the first lower edge 24. The first recess 35 has a shape whose depth increases toward the rear.

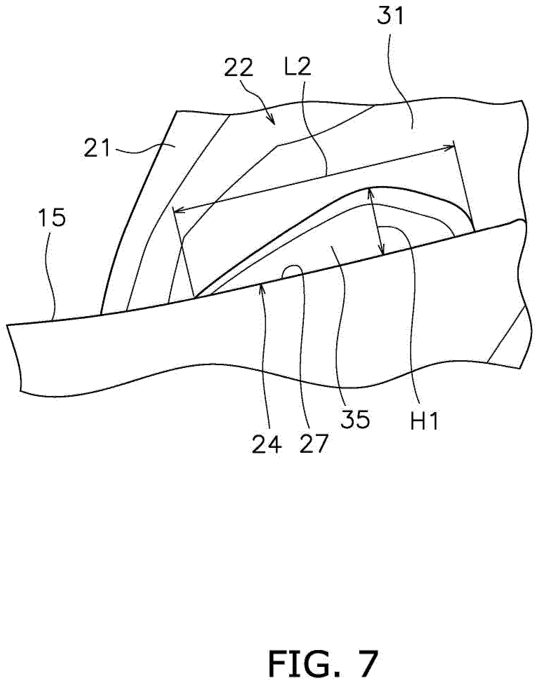

FIG. 7 is an enlarged side view of the first recess 35. As shown in FIG. 7, the height H1 of the first recess 35 may be 40 mm or more and 48 mm or less. The height H1 of the first recess 35 may be 36 mm or more and 52 mm or less. It should be noted that the height H1 of the first recess 35 means the height of the highest position in the first recess 35 from the first flat surface 27.

As seen in the vehicle side view, the length L2 of the first recess 35 in the front-rear direction may be 192 mm or more and 235 mm or less. As seen in the vehicle side view, the length L2 of the first recess 35 in the front-rear direction may be 171 mm or more and 256 mm or less.

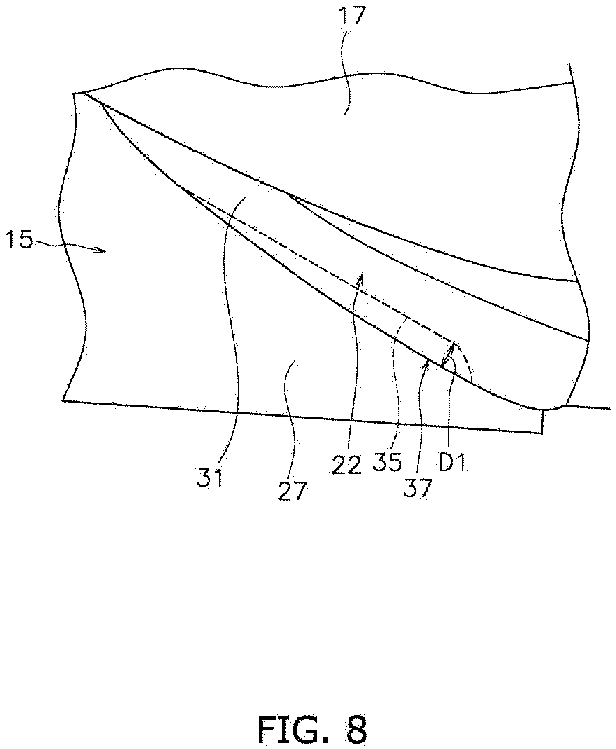

FIG. 8 is an enlarged top view of the first recess 35. As shown in FIG. 8, the depth D1 of the first recess 35 may be 5.4 mm or more and 6.6 mm or less. The depth D1 of the first recess 35 may be 4.8 mm or more and 7.2 mm or less. The depth D1 of the first recess 35 means the depth of the position of the first recess 35 that is most recessed laterally inward from the first side surface 22.

The second side surface 23 includes a second recess 36. The second recess 36 has a shape recessed laterally inward of the rear cover 16. The second recess 36 overlaps the engine 11 as seen in the vehicle side view. The second recess 36 is disposed adjacent to the second flat surface 28. The second recess 36 is provided symmetrically with the first recess 35.

As shown in FIG. 5, the first side surface 22 includes a first bulging portion 37. The first bulging portion 37 is disposed above the first recess 35. The first bulging portion 37 has a shape that bulges laterally outward. The second side surface 23 includes a second bulging portion 38. The second bulging portion 38 is disposed above the second recess 36. The second bulging portion 38 has a shape that bulges laterally outward.

In the straddled vehicle 1 according to the present embodiment, the rear cover 16 under the seat 17 is provided with the first recess 35. The first recess 35 is disposed adjacent to the footboard 15 on the first side surface 22 of the cover and has a shape recessed laterally inward of the rear cover 16. Therefore, the footrest space is enlarged in the footboard 15 while suppressing the deterioration of the foot grounding ability. Further, the width of the rear cover 16 is partially narrowed by the first recess 35 instead of narrowing the width of the entire rear cover 16. Therefore, a space for arranging the engine 11 is provided inside the rear cover 16.

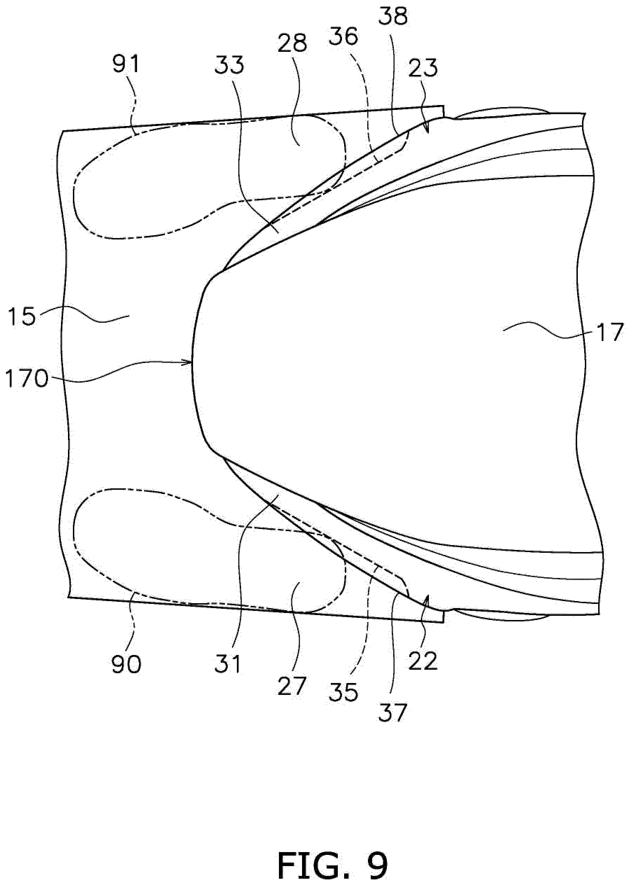

FIG. 9 is a top view showing the position of the rider's shoes 90, 91 placed on the footboard 15. As shown in FIG. 9, the first recess 35 is provided to fit the heel of the rider's shoe 90 placed on the first flat surface 27. A rider can place the shoe 90 on the first flat surface 27 with a portion of the sole of the shoe 90 resting in the first recess 35. Therefore, the footrest space on the lateral side of the rear cover 16 on the footboard 15 is increased as compared with the case where the first recess 35 is not provided. Further, by making the first recess 35 as small as possible, a large space inside the rear cover 16 can be provided. For the second recess 36 as well, the same effects as those for the first recess 35 are obtained.

An embodiment has been described as a scooter, but may be another vehicle.

The shape of the footboard 15 is not limited to that of the above embodiment, and may be changed. For example, the footboard 15 may have a shape in which the central portion in the left-right direction protrudes upward. The shape of the rear cover 16 is not limited to that of the above embodiment, and may be changed. For example, the shape of the first side surface 22 may be changed. The first side surface 22 may be integrally formed. The shape of the second side surface 23 may be changed. The second side surface 23 may be integrally formed.

The length of the wheelbase L1 of the straddled vehicle 1 is not limited to that of the above embodiment, and may be changed. The maximum width W1 of the footboard 15 is not limited to that of the above embodiment, and may be changed. However, in the small straddled vehicle 1 as in the above-described embodiment, the effect of expanding the footrest space by the first recess 35 and the second recess 36 is more effective because the footboard 15 has a limited footrest space.

The shape of the first recess 35 is not limited to that of the embodiment described above, and may be changed. The first recess 35 may be larger or smaller than that of the embodiment described above. The shape of the second recess 36 is not limited to that of the embodiment described above, and may be changed. The second recess 36 may be larger or smaller than that of the embodiment described above. However, due to the shapes of the first recess 35 and the second recess 36 described above, the first recess 35 and the second recess 36 are as small as possible so that the heels of the rider's shoes 90 and 91 can be placed thereon. Therefore the effect of enlarging the space in the rear cover 16 becomes more effective.

### REFERENCE SIGNS LIST

- 11:: Engine

- 15:: Footboard
- 16:: Rear cover
- 17:: Seat
- 22:: First side surface
- 23:: Second side surface
- 24:: First lower edge
- 25:: Second lower edge
- 27:: First flat surface
- 28:: Second flat surface
- 31:: First side panel
- 32:: Second side panel
- 35:: First recess
- 36:: Second recess
- 37:: First bulging portion

## Claims

1. A straddled vehicle (1) comprising:
a seat (17);
a cover (16) at least partly disposed below the seat (17) with regard to a vehicle up-down direction;
an engine (11) disposed in the cover (16);
a footboard (15) disposed in front of the cover (16) with regard to the vehicle front-rear direction, wherein
the cover (16) includes a first side surface (22) extending upward from the footboard (15) with regard to the vehicle up-down direction,
the first side surface (22) includes a first recess (35) recessed laterally inward of the cover (16) with regard to a vehicle left-right direction,
the first recess (35) is disposed adjacent to the footboard (15),
the first recess (35) overlaps the engine (11) as seen in a vehicle side view,
the cover (16) includes a second side surface (23) located opposite to the first side surface (22),
the second side surface (23) extends upward from the footboard (15) with regard to the vehicle up-down direction,
the second side surface (23) includes a second recess (36) recessed laterally inward of the cover (16) with regard to the vehicle left-right direction,
the second recess (36) is disposed adjacent to the footboard (15), and
the second recess (36) overlaps the engine (11) as seen in the vehicle side view,
**characterized in that** the first side surface (22) includes a first lower edge (24) inclined forward with regard to the vehicle front-rear direction and laterally inward with regard to the vehicle left-right direction,
the footboard (15) includes a first flat surface (27) extending forward with regard to the vehicle front-rear direction from a laterally outside of the first lower edge (24), and the first recess (35) is disposed adjacent to the first flat surface (27), and
the first recess (35) has a shape that is configured to fit a heel of a rider's shoe placed on the first flat surface (27), wherein
the second side surface (23) includes a second lower edge (25) inclined forward and laterally inward with regard to the vehicle left-right direction,
the footboard (15) includes a second flat surface (28) extending forward with regard to the vehicle front-rear direction from a laterally outside of the second lower edge (25), and
the second recess (36) is disposed adjacent to the second flat surface (28).

2. The straddled vehicle (1) according to claim 1, **characterized in that** the first side surface (22) includes
a first side panel (31), and
a second side panel (32) provided separately from the first side panel (31) and attached to the first side panel (31).

3. The straddled vehicle (1) according to claim 1 or 2, **characterized in that** the first side surface (22) includes a bulging portion (37) having a shape that bulges laterally outward with regard to the vehicle left-right direction, and
the bulging portion (37) is disposed above the first recess (35) with regard to the vehicle up-down direction.

4. The straddled vehicle (1) according to any one of claims 1 to 3, **characterized in that** the footboard (15) has a flat shape across a vehicle width direction of the straddled vehicle (1) with regard to the vehicle left-right direction.

5. The straddled vehicle (1) according to any one of claims 1 to 4, **characterized in that** a maximum width (W1) of the footboard (15) is 435 mm or more and 531 mm or less.

6. The straddled vehicle (1) according to any one of claims 1 to 4, **characterized in that** a maximum width (W1) of the footboard (15) is 386 mm or more and 580 mm or less.

7. The straddled vehicle (1) according to any one of claims 1 to 6, **characterized in that** a wheelbase (L1) of the straddled vehicle (1) is 1143 mm or more and 1452 mm or less.

8. The straddled vehicle (1) according to any one of claims 1 to 6, **characterized in that** a wheelbase (L1) of the straddled vehicle (1) is 1270 mm or more and 1320 mm or less.

9. The straddled vehicle (1) according to any one of claims 1 to 8, **characterized in that** a height (H1) of the first recess (35) is 40 mm or more and 48 mm or less.

10. The straddled vehicle (1) according to any one of claims 1 to 8, **characterized in that** a height (H1) of the first recess (35) is 36 mm or more and 52 mm or less.

11. The straddled vehicle (1) according to any one of claims 1 to 10, **characterized in that** a depth (D1) of the first recess (35) is 5.4 mm or more and 6.6 mm or less.

12. The straddled vehicle (1) according to any one of claims 1 to 10, **characterized in that** a depth (D1) of the first recess (35) is 4.8 mm or more and 7.2 mm or less.

## Patentansprüche

1. Ein Spreiz-Sitz-Fahrzeug (1) mit:
einen Sitz (17);
eine Abdeckung (16), die zumindest teilweise unterhalb des Sitzes (17) in Bezug auf eine Fahrzeug-Auf-Ab-Richtung angeordnet ist;
einen in der Abdeckung (16) angeordneten Motor (11);
ein Trittbrett (15), das in Bezug auf die Fahrzeug-Vorder-Rück-Richtung vor der Abdeckung (16) angeordnet ist, wobei
die Abdeckung (16) eine erste Seitenfläche (22) aufweist, die sich vom Trittbrett (15) in Bezug auf die Fahrzeug-Auf-Ab-Richtung nach oben erstreckt,
die erste Seitenfläche (22) eine erste Aussparung (35) aufweist, die seitlich innerhalb der Abdeckung (16) in Bezug auf eine Fahrzeug-Links-Rechts-Richtung ausgespart ist,
die erste Aussparung (35) neben dem Trittbrett (15) angeordnet ist,
die erste Aussparung (35) überlappt den Motor (11) in der Seitenansicht des Fahrzeugs,
die Abdeckung (16) eine zweite Seitenfläche (23) aufweist, die der ersten Seitenfläche (22) gegenüberliegt,
die zweite Seitenfläche (23) erstreckt sich vom Trittbrett (15) in Bezug auf die Fahrzeug-Auf-Ab-Richtung nach oben,
die zweite Seitenfläche (23) eine zweite Aussparung (36) aufweist, die in Bezug auf die Fahrzeug-Links-Rechts-Richtung seitlich innerhalb der Abdeckung (16) ausgespart ist,
die zweite Aussparung (36) neben dem Trittbrett (15) angeordnet ist, und
die zweite Aussparung (36) überlappt den Motor (11) in der Seitenansicht des Fahrzeugs,
**dadurch gekennzeichnet, dass** die erste Seitenfläche (22) eine erste untere Kante (24) aufweist, die in Bezug auf die Fahrzeug-Vorder-Rück-Richtung nach vorne und in Bezug auf die Fahrzeug-Links-Rechts-Richtung seitlich nach innen geneigt ist,
das Trittbrett (15) eine erste ebene Fläche (27) aufweist, die sich von einer seitlichen Außenseite der ersten unteren Kante (24) in Bezug auf die Fahrzeug-Vorder-Rück-Richtung nach vorne erstreckt, und
die erste Aussparung (35) neben der ersten ebenen Fläche (27) angeordnet ist, und die erste Aussparung (35) eine Form hat, die so gestaltet ist, dass sie zu einem Absatz eines Fahrerschuhs passt, der auf die erste flache Oberfläche (27) gestellt wird, wobei
die zweite Seitenfläche (23) eine zweite untere Kante (25) aufweist, die in Bezug auf die Fahrzeug-Links-Rechts-Richtung nach vorne und seitlich nach innen geneigt ist,
das Trittbrett (15) eine zweite ebene Fläche (28) aufweist, die sich von einer seitlichen Außenseite der zweiten unteren Kante (25) in Bezug auf die Fahrzeug-Vorder-Rück-Richtung nach vorne erstreckt, und
die zweite Aussparung (36) neben der zweiten ebenen Fläche (28) angeordnet ist.

2. Das Spreiz-Sitz-Fahrzeug (1) nach Anspruch 1, **dadurch gekennzeichnet, dass** die erste Seitenfläche (22) aufweist
ein erstes Seitenpanel (31), und
ein zweites Seitenpanel (32), das getrennt von dem ersten Seitenpanel (31) vorgesehen und an dem ersten Seitenpanel (31) befestigt ist.

3. Das Spreiz-Sitz-Fahrzeug (1) nach Anspruch 1 oder 2, **dadurch gekennzeichnet, dass** die erste Seitenfläche (22) einen Wölbungsabschnitt (37) aufweist, der eine Form hat, die sich seitlich nach außen in Bezug auf die Fahrzeug-Links-Rechts-Richtung wölbt, und
der Wölbungsabschnitt (37) oberhalb der ersten Aussparung (35) in Bezug auf die Fahrzeug-Auf-Ab-Richtung angeordnet ist.

4. Das Spreiz-Sitz-Fahrzeug (1) nach einem der Ansprüche 1 bis 3, **dadurch gekennzeichnet, dass** das Trittbrett (15) quer zu einer Fahrzeug-Breiten-Richtung des Spreiz-Sitz-Fahrzeugs (1) in Bezug auf die Fahrzeug-Links-Rechts-Richtung eine flache Form aufweist.

5. Das Spreiz-Sitz-Fahrzeug (1) nach einem der Ansprüche 1 bis 4, **dadurch gekennzeichnet, dass** eine maximale Breite (W1) des Trittbretts (15) 435 mm oder mehr und 531 mm oder weniger beträgt.

6. Das Spreiz-Sitz-Fahrzeug (1) nach einem der Ansprüche 1 bis 4, **dadurch gekennzeichnet, dass** eine maximale Breite (W1) des Trittbretts (15) 386 mm oder mehr und 580 mm oder weniger beträgt.

7. Das Spreiz-Sitz-Fahrzeug (1) nach einem der Ansprüche 1 bis 6, **dadurch gekennzeichnet, dass** ein Radstand (L1) des Spreiz-Sitz-Fahrzeugs (1) 1143 mm oder mehr und 1452 mm oder weniger beträgt.

8. Das Spreiz-Sitz-Fahrzeug (1) nach einem der Ansprüche 1 bis 6, **dadurch gekennzeichnet, dass** ein Radstand (L1) des Spreiz-Sitz-Fahrzeugs (1) 1270 mm oder mehr und 1320 mm oder weniger beträgt.

9. Das Spreiz-Sitz-Fahrzeug (1) nach einem der Ansprüche 1 bis 8, **dadurch gekennzeichnet, dass** eine Höhe (H1) der ersten Aussparung (35) 40 mm oder mehr und 48 mm oder weniger beträgt.

10. Das Spreiz-Sitz-Fahrzeug (1) nach einem der Ansprüche 1 bis 8, **dadurch gekennzeichnet, dass** eine Höhe (H1) der ersten Aussparung (35) 36 mm oder mehr und 52 mm oder weniger beträgt.

11. Das Spreiz-Sitz-Fahrzeug (1) nach einem der Ansprüche 1 bis 10, **dadurch gekennzeichnet, dass** eine Tiefe (D1) der ersten Aussparung (35) 5,4 mm oder mehr und 6,6 mm oder weniger beträgt.

12. Das Spreiz-Sitz-Fahrzeug (1) nach einem der Ansprüche 1 bis 10, **dadurch gekennzeichnet, dass** eine Tiefe (D1) der ersten Aussparung (35) 4,8 mm oder mehr und und 7,2 mm oder weniger beträgt.

## Revendications

1. Véhicule à enfourcher (1) comprenant :
un siège (17) ;
un couvercle (16) au moins partiellement disposé au-dessous du siège (17) par rapport à une direction haut-bas de véhicule ;
un moteur (11) disposé dans le couvercle (16) ;
un repose-pied (15) disposé en avant du couvercle (16) par rapport à la direction avant-arrière de véhicule, dans lequel
le couvercle (16) comporte une première surface latérale (22) s'étendant vers le haut à partir du repose-pied (15) par rapport à la direction haut-bas de véhicule,
la première surface latérale (22) comporte un premier évidement (35) évidé latéralement vers l'intérieur du couvercle (16) par rapport à une direction gauche-droite de véhicule,
le premier évidement (35) est disposé à proximité adjacente du repose-pied (15),
le premier évidement (35) chevauche le moteur (11) comme observé sur une vue de côté de véhicule,
le couvercle (16) comporte une seconde surface latérale (23) située à l'opposé de la première surface latérale (22),
la seconde surface latérale (23) s'étend vers le haut à partir du repose-pied (15) par rapport à la direction haut-bas de véhicule,
la seconde surface latérale (23) comporte un second évidement (36) évidé latéralement vers l'intérieur du couvercle (16) par rapport à la direction gauche-droite de véhicule,
le second évidement (36) est disposé à proximité adjacente du repose-pied (15), et
le second évidement (36) chevauche le moteur (11) comme observé sur la vue de côté de véhicule,
**caractérisé en ce que** la première surface latérale (22) comporte un premier bord inférieur (24) incliné vers l'avant par rapport à la direction avant-arrière de véhicule et latéralement vers l'intérieur par rapport à la direction gauche-droite de véhicule,
le repose-pied (15) comporte une première surface plate (27) s'étendant vers l'avant par rapport à la direction avant-arrière de véhicule latéralement à partir d'un extérieur du premier bord inférieur (24), et
le premier évidement (35) est disposé à proximité adjacente de la première surface plate (27), et
le premier évidement (35) a une forme qui est configurée pour s'adapter à un talon d'une chaussure d'un pilote placé sur la première surface plate (27), dans lequel
la seconde surface latérale (23) comporte un second bord inférieur (25) incliné vers l'avant et latéralement vers l'intérieur par rapport à la direction gauche-droite de véhicule,
le repose-pied (15) comporte une seconde surface plate (28) s'étendant vers l'avant par rapport à la direction avant-arrière de véhicule latéralement à partir d'un extérieur du second bord inférieur (25), et
le second évidement (36) est disposé à proximité adjacente de la seconde surface plate (28).

2. Véhicule à enfourcher (1) selon la revendication 1, **caractérisé en ce que** la première surface latérale (22) comporte
un premier panneau latéral (31), et
un second panneau latéral (32) disposé séparément du premier panneau latéral (31) et fixé au premier panneau latéral (31).

3. Véhicule à enfourcher (1) selon la revendication 1 ou 2, **caractérisé en ce que** la première surface latérale (22) comporte une partie bombée (37) ayant une forme qui gonfle latéralement vers l'extérieur par rapport à la direction gauche-droite de véhicule, et
la partie bombée (37) est disposée au-dessus du premier évidement (35) par rapport à la direction haut-bas de véhicule.

4. Véhicule à enfourcher (1) selon l'une quelconque des revendications 1 à 3, **caractérisé en ce que** le repose-pied (15) a une forme plate à travers une direction de largeur de véhicule du véhicule à enfourcher (1) par rapport à la direction gauche-droite de véhicule.

5. Véhicule à enfourcher (1) selon l'une quelconque des revendications 1 à 4, **caractérisé en ce qu'**une largeur maximale (W1) du repose-pied (15) est de 435 mm ou plus et de 531 mm ou moins.

6. Véhicule à enfourcher (1) selon l'une quelconque des revendications 1 à 4, **caractérisé en ce qu'**une largeur maximale (W1) du repose-pied (15) est de 386 mm ou plus et de 580 mm ou moins.

7. Véhicule à enfourcher (1) selon l'une quelconque des revendications 1 à 6, **caractérisé en ce que** l'empattement (L1) du véhicule à enfourcher (1) est de 1 143 mm ou plus et de 1 452 mm ou moins.

8. Véhicule à enfourcher (1) selon l'une quelconque des revendications 1 à 6, **caractérisé en ce qu'**un empattement (L1) du véhicule à enfourcher (1) est de 1 270 mm ou plus et de 1 320 mm ou moins.

9. Véhicule à enfourcher (1) selon l'une quelconque des revendications 1 à 8, **caractérisé en ce qu'**une hauteur (H1) du premier évidement (35) est de 40 mm ou plus et de 48 mm ou moins.

10. Véhicule à enfourcher (1) selon l'une quelconque des revendications 1 à 8, **caractérisé en ce qu'**une hauteur (H1) du premier évidement (35) est de 36 mm ou plus et de 52 mm ou moins.

11. Véhicule à enfourcher (1) selon l'une quelconque des revendications 1 à 10, **caractérisé en ce qu'**une profondeur (D1) du premier évidement (35) est de 5,4 mm ou plus et de 6,6 mm ou moins.

12. Véhicule à enfourcher (1) selon l'une quelconque des revendications 1 à 10, **caractérisé en ce qu'**une profondeur (D1) du premier évidement (35) est de 4,8 mm ou plus et de 7,2 mm ou moins.
